Europäisches Patentamt

European Patent Office

Office européen des brevets

(19)

(11) Veröffentlichungsnummer: **0 074 636**
**B1**

(12) **EUROPÄISCHE PATENTSCHRIFT**

(45) Veröffentlichungstag der Patentschrift:
01.04.87

(51) Int. Cl.⁴: **A 01 G 9/02**

(21) Anmeldenummer: **82108358.1**

(22) Anmeldetag: **10.09.82**

(54) **Einrichtung zum Ziehen von Zwiebeln.**

(30) Priorität: **11.09.81 CH 5883/81**

(43) Veröffentlichungstag der Anmeldung:
**23.03.83 Patentblatt 83/12**

(45) Bekanntmachung des Hinweises auf die Patenterteilung:
**01.04.87 Patentblatt 87/14**

(84) Benannte Vertragsstaaten:
**AT BE CH DE FR GB IT LI NL**

(56) Entgegenhaltungen:
**EP - A - 0 052 264**
**EP - A - 0 061 244**
**CH - A - 346 720**
**DE - A - 3 016 493**
**FR - A - 2 346 966**
**US - A - 2 930 162**

(73) Patentinhaber: **BREVETEAM S.A., c/o Dr. Paul Stadlin Gartenstrasse 2 Postfach 758, CH-6300 Zug (CH)**

(72) Erfinder: **Der Erfinder hat auf seine Nennung verzichtet**

(74) Vertreter: **Lesser, Karl-Bolko, Dipl.-Ing., European Patent Attorney Johanneskirchnerstrasse 149a, D-8000 München 81 (DE)**

ACTORUM AG

### Beschreibung

Die Erfindung betrifft eine Einrichtung zum Ziehen von Zwiebeln gemäss Oberbegriff des Anspruches 1.

Wenngleich hier immer von Zwiebeln gesprochen wird, kann anstelle der Zwiebeln auch eine Knolle, die eine ähnliche äussere Form aufweist, verwendet und verstanden werden.

Eine gattungsgemässe Einrichtung ist aus der DE-U 7 209 409 bekannt. Eine solche Einrichtung eignet sich zum Ziehen von Blumenzwiebeln, Esszwiebeln oder dergleichen. Sie besteht aus einem wasseraufnehmenden Behälter, der bei dieser bekannten Einrichtung aus einem topfförmigen, oben offenen Unterteil und einem eine Art Deckel bildenden Oberteil besteht. In das topfförmige Unterteil wird Wasser gefüllt, während das den Deckel bildende Oberteil die Zwiebel aufnimmt. Sowohl das Unterteil, als auch das Oberteil dieser bekannten Einrichtung sind kreisförmig ausgebildet. Dieses, das Oberteil bildende Element weist einen kreisringförmigen, horizontalen Randstreifen auf, der dort auf der Oberkante des topfförmigen Unterteils gelagert ist. Diesem kreisförmigen Randstreifen schliesst sich nach innen eine kalottenringförmige, sich in den Unterteil hinein erstreckende Vertiefung an. Der Mittelbereich dieser Vertiefung ist offen, damit die Wurzeln der Zwiebel in den mit Wasser gefüllten Unterteil der Einrichtung hindurchgreifen können. Weiterhin sind an der Innenkante des kreisringförmigen Randstreifens dieser bekannten Einrichtung sich nach innen und von dem Unterteil weg erstreckende Arme vorgesehen, die eine in die Vertiefung eingelegte Zwiebel seitlich umgreifen. Bei dieser bekannten Einrichtung zum Ziehen von Zwiebeln steht somit die Zwiebel selbst über die Einrichtung hinaus, zum anderen drücken die dem Halten der Zwiebel in der Einrichtung dienenden Arme auf die Zwiebel, wodurch das Wachstum der Zwiebel negativ beeinflusst wird. Die über das Unterteil hinausstehenden Teile der Zwiebel, die nicht von den Armen des Oberteils bedeckt werden, sind bei einem Transport der die Zwiebel enthaltenden Einrichtung grosser Verletzungsgefahr ausgesetzt.

Aus der EP-A 0 052 264 (Stand der Technik nach EPU Art. 54 (3) ist ein hydroponisches Gefäss bekannt, welches aus einem kastenförmigen Behälter besteht, der oben mittels einer Platte geschlossen ist. Diese Platte weist kreisförmige Öffnungen auf, in die kreiszylinderförmige, als Pflanzenhalter dienende Einsätze einhängbar sind. Diese Einsätze besitzen an ihrem oberen Ende einen kreisringförmigen, nach aussen vorstehenden Randstreifen, welcher auf der Platte aufliegt. Der zylinderförmige Teil des Einsatzes ist im wesentlichen unterhalb der Platte und im Innern des Behälters angeordnet.

Diese Einsätze sind an ihrem unteren Ende kegelstumpfförmig ausgebildet und in diesem Bereich weisen sie Durchbrechungen für die Wurzeln der Pflanzen auf. Der Boden dieses Einsatzes kann durch eine ebene Einlage gebildet sein, auf der Samen abgelegt wird, um die Pflanze von Anfang an in diesem Behälter aufzuziehen.

Ein solcher Behälter, der eine Anzahl solcher Einsätze aufweist, besitzt darüberhinaus unterhalb der die Einsätze tragenden Platte, an dieser festgelegt, noch eine Einrichtung zum Belüften der in dem Behälter enthaltenen Nährflüssigkeit. Ein solches Gefäss ist schon von der Grösse her nur bedingt mit einer gattungsgemässen Einrichtung vergleichbar, wenngleich in einem solchen Gefäss auch Zwiebeln gezogen werden können. Durch die hohlzylinderförmige und nach unten kegelstumpfförmige Ausbildung des Einsatzes kann in diesem eine Zwiebel auch geschützt in dem Einsatz transportiert werden. Ein Transport des gesamten Gefässes mit FLüssigkeit ist aber aufgrund der Grösse desselben ohne Hilfsmittel nicht möglich. Auch ist es aufgrund der Ausbildung der gesamten Einrichtung nicht möglich, die Zwiebel zu sehen.

Aus der DE-A 3 016 493 ist ein Pflanzenzuchtgefäss bekannt, das eine Pflanze, ein Verwurzelungssubstrat und Wasser enthält. Das Gefäss weist mindestens in seinem Oberteil parallele Innenwände auf – es kann somit insgesamt parallele Innenwände aufweisen. Das Verwurzelungssubstrat wird insbesondere durch Klemmsitz an den Innenwänden, an denen es auf- und abbewegbar ist, gehalten. Das Gefäss kann nun an seinen Innenwänden Einschnürungen od.dgl. aufweisen, durch die das Verwurzelungssubstrat darüberhinaus noch besser gehalten werden kann, da diese Einschnürungen nicht nur in Bezug auf das Innere des Gefässes eine Einschnürung darstellen, sondern das Verwurzelungssubstrat an seiner Seite einschnüren.

Bei einer dort beschriebenen Ausführungsform kann ein Teil des Verwurzelungssubstrates, nämlich der Boden desselben, die Form einer Siebplatte, eines Netzes od.dgl. besitzen. Dieser Boden ist jedoch mit dem aus der DE-U 7 209 409 bekannten Element oder dem im folgenden beschriebenen erfindungsgemässen Element nicht vergleichbar.

Weiterhin befinden sich die Wurzeln bei diesem aus der DE-A 3 016 493 bekannten Gefäss im wesentlichen innerhalb und unterhalb des Verwurzelungssubstrates, während sich bei der gattungsgemässen Einrichtung die Zwiebel innerhalb einer Vertiefung des Elementes, aber oberhalb desselben befindet und die Haarwurzeln zwar durch das Element hindurchdringen, aber unterhalb desselben angeordnet sind.

Der Erfindung liegt die Aufgabe zugrunde, eine gattungsgemässe Einrichtung zu schaffen, mit der die Zwiebel schonender behandelt wird und sicherer transportiert werden kann.

Diese Aufgabe wird durch den Gegenstand des Anspruches gelöst. Erfindungsgemäss weist der gattungsgemäss ausgebildete Behälter eine zylinderförmige Innenwandung auf, die zwischen einem Viertel und drei Viertel der Höhe des Behälters eine einzige kreisringförmige oder mehrere nach innen in die Zylinderform hinein vorstehende Auskragung(en) aufweist. Das die Zwiebel aufnehmende Element liegt erfindungsgemäss mit seinem Randstreifen auf diesen Auskragungen auf. Ausserdem liegt eine den Behälter oben abschliessende Einrichtung auf dem oberen Rand des Behälters oder auf sich vom Behälter nach aussen erstreckenden Auskragungen auf. Es kann zwar in einer axialen Höhe eine einzige kreisringförmige Auskragung vorgesehen sein, es empfiehlt sich aber, mehrere voneinander beabstandete, über den Umfang gleichmässig verteilte Auskragungen nach innen vorzusehen, die sich mit dazwischenliegenden Auskragungen des Behälters nach aussen nach einem anderen, zusätzlichen Vorschlag der Anmelderin (EP-A-0 074 638) abwechseln. Vorzugsweise sind vier Auskragungen nach innen vorgesehen, die dann, wenn unterbrochene Auskragungen vorgesehen sind, ein leichteres Einbringen des Elementes in die gewünschte Lage des Behälters gestatten.

Die Form der Vertiefung des Elementes kann der Form der Zwiebel angepasst sein, also gewölbt sein; so kann diese Vertiefung gewölbt, insbesondere halbkugelförmig ausgebildet sein. Die gewölbte Form der Vertiefung ist aber auf eine bestimmte Zwiebelform und -grösse ausgerichtet. Vorteilhafterweise ist deshalb die Vertiefung des Elementes etwa kegelstumpfförmig ausgebildet, wodurch je nach Grösse die Zwiebel in einer bestimmten Lage bezüglich des Elementes zu liegen kommt.

Vorzugsweise sind mindestens im Boden der Vertiefung Durchbrechungen vorgesehen. Durch diese Durchbrechungen dringen die Wurzeln der Zwiebel hindurch. Darüber hinaus können auch in dem unteren Bereich der Mantelfläche der Vertiefungen Durchbrechungen vorgesehen sein, dies empfiehlt sich insbesondere dann, wenn ein bestimmt ausgebildetes Element für verschieden grosse Zwiebeln verwendet werden soll, weil dann die Wurzeln grösserer Zwiebeln, die höher in dem Element zu wachsen beginnen, aus diesem austreten können.

Gemäss einer bevorzugten Ausführungsform besteht das Element aus einer tiefgezogenen, steifen Kunststoffolie. Vorzugsweise besteht das gesamte Element aus einem Netz, wobei dieses Element aus einer geschlitzten, danach geschrumpften und tiefgezogenen Kunststoffolie besteht.

Die den Behälter abschliessende Einrichtung kann ein Deckel sein, der zentrisch eine Öffnung aufweist, durch die hinaus die Zwiebel spriessen kann.

Die sich vom Behälter nach aussen erstreckenden Auskragungen in Höhe der nach innen in die Zylinderform hinein vorstehenden Auskragungen sind über dem Umfang des Behälters mit diesen abwechselnd vorgesehen.

Bevorzugt ist die den Behälter nach oben abschliessende Einrichtung eine Einrichtung zum Verdunkeln, zum Feuchthalten und zum Temperaturausgleich, die sich auf den sich nach aussen erstreckenden Auskragungen abstützt.

Gemäss einer besonderen Ausführungsform beträgt der Abstand der nach innen in die Zylinderform hinein vorstehenden Auskragungen vom Boden des Behälters zwischen einem Drittel und der Hälfte der Höhe desselben.

Weitere Einzelheiten der Erfindung ergeben sich aus den im folgenden anhand der Zeichnung beschriebenen Ausführungsbeispielen der Erfindung.

Es zeigt:

Figur 1 einen zylinderförmigen Behälter mit Auskragungen an seiner Innenwand im Schnitt, auf denen ein zwiebeltragendes Element angeordnet ist;

Figur 2 einen Behälter gemäss einer zweiten Ausführungsform im Schnitt, dessen Element mehrere Zwiebeln aufnehmen kann;

Figur 3 ein Element für drei Zwiebeln in Draufsicht;

Figur 4 ein Element, dessen Vertiefung kegelstumpfförmig ausgebildet ist, in der Seitenansicht und

Figur 5 ein Element, dessen Vertiefung halbkugelförmig ausgebildet ist, in der Seitenansicht.

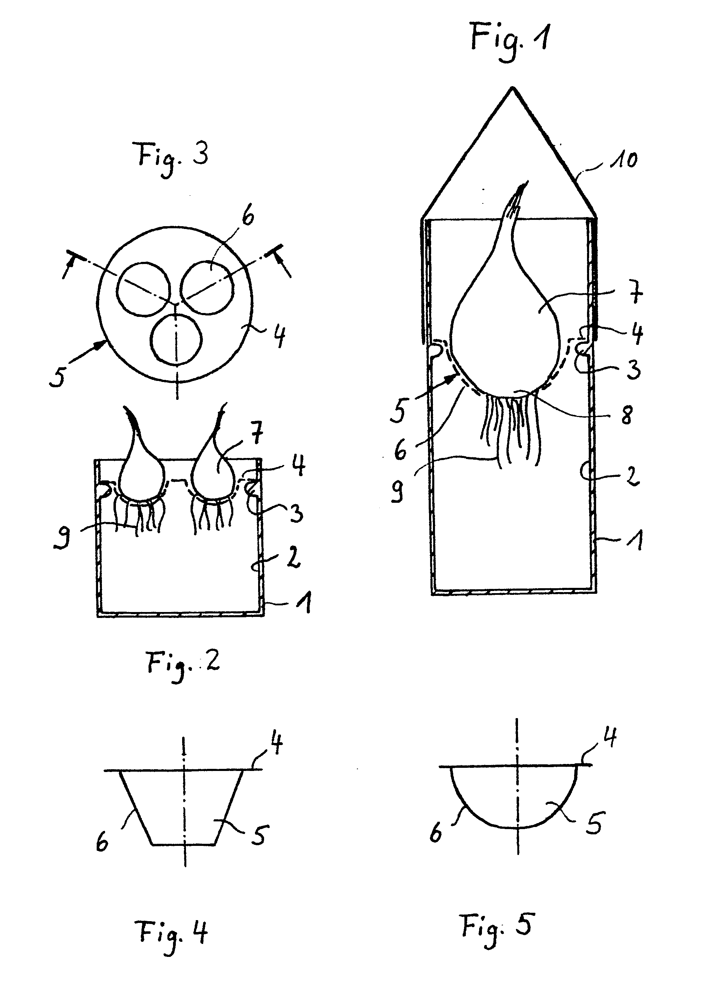

Eine Einrichtung zum Ziehen von Zwiebeln besteht hier aus einem zylinderförmigen Behälter 1, der an seiner Innenwandung 2 nach innen vorstehende Auskragungen 3 aufweist. Diese Auskragungen 3 liegen in einer axialen Höhe, die hier etwa ⅔ der Gesamthöhe des Behälters 1 beträgt. Auf diesen Auskragungen 3 liegt der Randstreifen 4 eines hier als Netz ausgebildeten Elementes 5 auf. Dieses Element 5 besitzt zur Mitte hin eine Vertiefung 6, die bei der Ausführungsform gemäss Figur 1 halbkugelförmig ausgebildet und deren zentrischer Teil abgeschnitten ist. In dieser Vertiefung 6 wird eine Zwiebel 7 angeordnet, wobei diese mit ihrer Wurzelseite 8 in der Vertiefung 6 zu liegen kommt. Die Wurzeln 9 der Zwiebel 7 erstrecken sich hier durch die zentrische Öffnung hindurch, sie können sich aber auch durch die Netzöffnungen hindurch erstrecken.

Die Figur 2 zeigt einen ähnlich aufgebauten Behälter 1, der hier jedoch verglichen mit seinem Durchmesser eine viel geringere Höhe aufweist. Darüber hinaus enthält das Element 5 nach Figur 2 mehrere, hier drei Vertiefungen 6, in die jeweils eine Zwiebel eingesetzt ist. Dieses Element 5 mit mehreren Vertiefungen eignet sich besonders für kleinwüchsigere Zwiebeln. Dieses Element 5 gemäss Figur 2 unterscheidet sich von dem Element 5 gemäss Figur 1 auch noch dadurch, dass die Vertiefungen mittig keinen Ausschnitt enthalten. Die Wurzeln der Zwiebeln müssen hier somit die Netzöffnungen durchdringen. Die netzförmig ausgebildeten Elemente 5 sind aus einer geschlitzten und anschliessend einem Schrumpfungsprozess unterworfenen Kunststoff-Folie hergestellt, wobei die Vertiefungen 6 durch Tiefziehen erhalten werden.

Müssen die Wurzeln 9 die Netzöffnungen durchdringen, so werden die Zwiebeln 7 insbesondere über die Wurzeln in der Vertiefung gehalten.

Die zentrischen Ausschnitte (vgl. Figur 1) der Vertiefung 6 können durch Ausstanzen erhalten werden.

Neben der halbkugelförmigen Vertiefung 6 des Elementes 5, das in Figur 5 noch gesondert dargestellt ist, kann die Vertiefung 6 auch kegelstumpfförmig ausgebildet sein, wie dies aus Figur 4 hervorgeht. Dies hat den Vorteil, dass ein solches Element 5 für verschieden grosse Zwiebeln verwendet werden kann, wobei eine Umfangslinie der Zwiebel 7 die kegelstumpfförmig ausgebildete Vertiefung 6 tangiert. Je nach Grösse der Zwiebel 7 kommt diese in unterschiedlichen Höhen zur Anlage. Bei der Ausführungsform des Elementes 5 gemäss Figur 4 kann der gesamte Boden der Vertiefung ausgestanzt sein und somit eine zentrische Öffnung bilden.

Die Ausbildung des Elementes 5 in Netzform hat darüber hinaus den Vorteil, dass sich die Vertiefung 6, insbesondere wenn sie kegelstumpfförmig ausgebildet ist, so dehnen kann, dass sie sich im Anlagebereich der Zwiebel 7 der Form derselben anpassen kann und somit die Zwiebel besser gehalten wird.

Aus der Figur 1 ist weiterhin noch eine Einrichtung 10 entnehmbar, die den oberhalb der Auskragungen befindlichen Teil des Behälters und der Zwiebel verdunkelt, eine bestimmte Feuchtigkeit in dem Behälter aufrechterhält und auch als Temperaturausgleich dient. Diese Einrichtung kann sich an den in Höhe der sich nach innen erstreckenden Auskragungen 3 befindlichen oben beschriebenen zusätzlichen Auskragungen nach aussen abstützen.

Bei einer nicht dargestellten Ausführungsform, bei der in zwei unterschiedlichen Höhen sich nach innen erstreckende Auskragungen 3 vorgesehen sind, wobei das die Zwiebel 7 haltende Element 5 insbesondere beim Transport der gesamten Einrichtung in der unteren Lage angeordnet ist, kann eine solche Einrichtung auch so ausgebildet sein, dass sie haubenförmig ausgebildet mit ihrem Rand auf dem oberen Rand des Behälters 1 aufliegt, vorzugsweise im Klemmsitz an der Innenwandung gehalten wird und mit ihrer Haubenspitze, die sich dann innerhalb des Behälters befindet, die Zwiebel gegen das Element hält.

Der Abstand der nach innen in die Zylinderform hinein vorstehenden Auskragungen 3 vom Boden des Behälters 1 kann zwischen einem Viertel und drei Viertel der Höhe des Behälters betragen, wobei dieser Abstand vorzugsweise zwischen einem Drittel und der Hälfte der Höhe beträgt. Dadurch liegen die Zwiebeln 7 relativ tief in dem Behälter, so dass auch dann, wenn der Spross der Zwiebel sehr gross gewachsen ist, die den Spross tragende Zwiebel nicht umfallen kann, da notfalls der Spross von den oberen Rändern des Behälters 1 gehalten wird. Solange der Spross der Zwiebel 7 noch klein und zart ist, wird er darüber hinaus dadurch, dass er sich noch im inneren des Behälters 1 befindet vor Beschädigungen auch dann geschützt, wenn sich kein Deckel auf dem Behälter befindet.

**Patentansprüche**

1. Einrichtung zum Ziehen von Zwiebeln, wie Blumenzwiebeln, Esszwiebeln oder dergleichen, mit einem wasseraufnehmenden Behälter (1) und einem mindestens eine Zwiebel (7) aufnehmenden Element (5), das einen kreisringförmigen, horizontalen Randstreifen (4) aufweist, dem sich in Richtung auf seinen Mittelpunkt mindestens eine mit Durchbrechungen versehene, die Zwiebel aufnehmende Vertiefung (6) anschliesst, dadurch gekennzeichnet, dass der Behälter (1) eine zylinderförmige Innenwandung (2) aufweist, die zwischen einem Viertel und drei Viertel der Höhe des Behälters (1) eine einzige kreisringförmige oder mehrere nach innen, in die Zylinderform hinein vorstehende Auskragung(en) (3) aufweist, auf der der eben ausgebildete Randstreifen (4) des aus einer tiefgezogenen, steifen Kunststoff-Folie bestehenden Elementes (5) liegt, und dass eine den Behälter (1) oben abschliessende Einrichtung (10) auf dem oberen Rand des Behälters (1) oder auf sich vom Behälter nach aussen erstreckenden Auskragungen aufliegt.

2. Einrichtung nach Anspruch 1, dadurch gekennzeichnet, dass der Behälter (1) vier gleichmässig über den Umfang verteilte Auskragungen (3) aufweist.

3. Einrichtung nach Anspruch 1 oder 2, dadurch gekennzeichnet, dass die Vertiefung (6) des Elementes (5) gewölbt, insbesondere halbkugelförmig, ausgebildet ist (Figur 5).

4. Einrichtung nach Anspruch 1 oder 2, dadurch gekennzeichnet, dass die Vertiefung (6) des Elementes (5) etwa kegelstumpfförmig ausgebildet ist (Figur 4).

5. Einrichtung nach einem der vorhergehenden Ansprüche, dadurch gekennzeichnet, dass mindestens im Boden der Vertiefung (6) Durchbrechungen vorgesehen sind.

6. Einrichtung nach Anspruch 5, dadurch gekennzeichnet, dass auch im unteren Bereich der Mantelfläche der Vertiefung (6) Durchbrechungen vorgesehen sind.

7. Einrichtung nach einem der vorhergehenden Ansprüche, dadurch gekennzeichnet, dass das Element (5) aus einem Netz besteht.

8. Einrichtung nach Anspruch 7, dadurch gekennzeichnet, dass das Element (5) aus einer geschrumpften und tiefgezogenen Schlitzfolie besteht.

9. Einrichtung nach einem der vorhergehenden Ansprüche, dadurch gekennzeichnet, dass die den Behälter (1) abschliessende Einrichtung (10) ein Deckel ist, der vorzugsweise zentrisch eine Öffnung aufweist.

10. Einrichtung nach einem der vorhergehenden Ansprüche, dadurch gekennzeichnet, dass die sich im Behälter (1) nach aussen erstreckenden Auskragungen in Höhe der nach innen in die Zylinderform hinein vorstehenden Auskragungen (3) über den Umfang des Behälters (1) mit diesen abwechselnd vorgesehen sind.

11. Einrichtung nach dem vorhergehenden Anspruch, dadurch gekennzeichnet, dass die den Behälter (1) nach oben abschliessende Einrichtung (10) eine Einrichtung zum Verdunkeln, zum Feuchthalten und zum Temperaturausgleich ist, die sich auf den sich nach aussen erstreckenden Auskragungen abstützt.

12. Einrichtung nach einem der vorhergehenden Ansprüche, dadurch gekennzeichnet, dass der Abstand der nach innen in die Zylinderform hinein vorstehenden Auskragungen (3) vom Boden des Behälters (1) zwischen einem Drittel und der Hälfte der Höhe beträgt.

**Claims**

1. Device for growing bulbs, such as the bulbs of flowers, onions or the like, with a container (1) receiving water and element (5) which receives at least one bulb (7) and has an annular horizontal peripheral portion (4) to which is joined in the direction towards its centre at least one recessed portion (6) provided with openings and receiving the bulb, characterised in that the container (1) has a cylindrical inner wall (2) which has, at between a quarter and threequarters of the height of the container (1) a single annular, or more than one, inwardly directed projection (3) extending inwards into the cylindrical shape, on which lies the peripheral portion (4) of flat form of the element (5) made of a deep-drawn stiff plastics foil, and that a device (10) closing the top of the container (1) rests on the upper edge of the top of the container (1) or on projections extending outwards from the container.

2. Device according to Claim 1, characterised in that the container (1) has four projections (3) distributed uniformly around its periphery.

3. Device according to Claim 1 or 2, characterised in that the recessed portion (6) of the element (5) is of bowed shape, in particular hemispherical (Figure 5).

4. Device according to Claim 1 or 2, characterised in that the recessed portion (6) of the element (5) is of substantially frusto-conical shape (Figure 4).

5. Device according to one of the foregoing claims, characterised in that openings are provided at least in the floor of the recessed portion (6).

6. Device according to Claim 5 characterised in that openings are also provided int the lower region of the circumferential surface of the recessed portion (6).

7. Device according to one of the foregoing claims, characterised in that the element (5) is in the form of a net.

8. Device according to Claim 7, characterised in that the element (5) comprises a shrunk and deep-drawn slit foil.

9. Device according to one of the foregoing claims, characterised in that the device (10) which closes the container (1) is a lid, which preferably has a central opening.

10. Device according to one of the foregoing claims, characterised in that the projections which extend outwards from the container (1) are provided at the same level as the projections (3) which extend inwards into the cylindrical shape, alternating with the latter around the periphery of the container (1).

11. Device according to the preceding claim, characterised in that the device (10) which closes the top of the container (1) is a device for darkening, retaining moisture and temperature compensation which supports itself on the outwardly extending projections.

12. Device according to one of the foregoing claims, characterised in that the distance from the floor of the container (1) of the projections (3) which extend inwards into the cylindrical shape amounts to between a third and a half of the height.

**Revendications**

1. Appareil pour la poussée germinative de bulbes, tels que des bulbes à fleurs, des oignons comestibles ou analogues, comprenant un récipient (1) rempli d'eau et un élément (5) contenant au moins un bulbe (7) et présentant une bande de bordure horizontale (4) en anneau de cercle, à laquelle se raccorde, dans la direction de son centre, au moins une cavité (6) recevant le bulbe, munie de perforations, caractérisé en ce que le récipient (1) comprend une paroi intérieure (2) cylindrique pourvue, entre le quart et les trois quarts de la hauteur du récipient (1), d'un seul ou de plusieurs rebords (3) en anneau de cercle, saillant vers l'intérieur de la forme en cylindre et sur lesquels se pose la bande de bordure (4) uniment conçue de l'élément (5) se composant d'une feuille de matière synthétique rigide emboutie, et en ce qu'un dispositif (10) fermant dans le haut le récipient (1) est posé sur son bord supérieur ou sur des saillies orientées vers l'extérieur du récipient.

2. Appareil selon la revendication 1, caractérisé en ce que le récipient (1) comprend quatre rebords (3) répartis régulièrement sur la périphérie.

3. Appareil selon l'une quelconque des revendications 1 et 2, caractérisé en ce que la cavité (6) de l'élément (5) est réalisée d'une manière concave, en particulier sous une forme hémisphérique (Figures 5).

4. Appareil selon l'une quelconque des revendications 1 et 2, caractérisé en ce que la cavité (6) de l'élément (5) est réalisée approximativement en tronc de cône. (Figure 4).

5. Appareil selon l'une quelconque des revendications 1 à 4, caractérisé en ce qu'on a prévu des perforations au moins dans le fond de la cavité (6).

6. Appareil selon la revendication 5, caractérisé en ce qu'on a pratiqué des perforations également dans la zone inférieure de la surface latérale de la cavité (6).

7. Appareil selon l'une des revendications 1 à 6, caractérisé en ce que l'élément (5) est constitué d'un filet.

8. Appareil selon la revendication 7, caractérisé en ce que l'élément (5) se compose d'une feuille à fentes frettée et emboutie.

9. Appareil selon l'une quelconque des revendications 1 à 8, caractérisé en ce que le dispositif (10) fermant le récipient (1) est un couvercle pourvu, de préférence centralement, d'une ouverture.

10. Appareil selon l'une quelconque des revendications 1 à 9, caractérisé en ce que les saillies orientées vers l'extérieur du récipient (1) sont prévues au niveau des rebords (3) faisant saillie vers l'intérieur de la forme en cylindre, et ce, alternativement par rapport à ceux-ci sur la périphérie du récipient (1).

11. Appareil selon l'une quelconque des revendications 1 à 10, caractérisé en ce que le dispositif (10) fermant dans le haut le récipient (1) est un dispositif pour l'obscurcissement, l'humidification et l'équilibre des températures, lequel se pose sur les saillies orientées vers l'extérieur.

12. Appareil selon l'une quelconque des revendications 1 à 11, caractérisé en ce que la distance des rebords (3) faisant saillie vers l'intérieur de la forme en cylindre du fond du récipient (1) se situe entre le tiers et la moitié de la hauteur.

Fig. 1

Fig. 3

Fig. 2

Fig. 4

Fig. 5